# EUROPÄISCHE PATENTSCHRIFT

(11) **EP 0 846 992 B1**
(45) Veröffentlichungstag und Bekanntmachung des Hinweises auf die Patenterteilung: **20.02.2002**
(21) Anmeldenummer: 97121290.7
(22) Anmeldetag: 04.12.1997
(51) Int. Cl.: G05B 19/042

(54) **Schaltungsanordnung**
Circuit arrangement
Structure de circuit

(30) Priorität: 05.12.1996 DE 19650381
(43) Veröffentlichungstag der Anmeldung: 10.06.1998
(73) Patentinhaber: Leopold Kostal GmbH & Co. KG, 58507 Lüdenscheid (DE)
(72) Erfinder: Borgmann, Uwe, Dr., 45665 Recklinghausen (DE); Janca, Reiner, Dr., 46296 Dorsten (DE)

(56) Entgegenhaltungen:
- EP-A- 0 499 695
- DE-A- 4 416 995
- DE-A- 4 440 280
- US-A- 4 794 312

## Beschreibung

Die vorliegende Erfindung betrifft eine insbesondere für Kraftfahrzeug-Bordnetze vorgesehene elektrische Schaltungsanordnung.

Eine solche Schaltungsanordnung ist vorzugsweise dazu bestimmt, in einem Kraftfahrzeug vorhandene elektrische Verbraucher wie z.B. Servopumpen, Kraftstoffpumpen und Lüfterantriebe sowie Glühlampen für das Fahr- bzw. Blinklicht anzusteuern, wobei dies über einen einer größeren Anzahl von Verbrauchern zugeordneten, d.h. die zugehörigen Leistungs-Endstufen beeinflussenden Mikrocomputer nach vorgegebenen Kriterien erfolgt.
Dabei ist von Bedeutung, daß die der Schaltungsanordnung zugehörigen Verbraucher und auch die damit verbundenen Leistungs-Endstufen vor Überlastung geschützt werden.
Im Zusammenhang mit über Leistungs-Endstufen ansteuerbaren Verbrauchern ist bereits vorgeschlagen worden, den aus Leistungshalbleitern gebildeten Endstufen eine die an den Verbrauchern vorhandenen elektrischen Größen "Spannung und Strom" oder die wärmetechnische Größe "Temperatur" erfassende Schutzschaltung direkt zuzuordnen, d.h. diese speziellen Endstufen übernehmen gleichzeitig auch Sicherheitsfunktionen.

Derartige Endstufen sind aber einerseits recht kostenintensiv und sind andererseits hinsichtlich ihrer Sicherungseigenschaft nur relativ begrenzt einsatzfähig.

Weiterhin ist durch die DE 195 07 039 A1 eine Schaltungsanordnung mit mehreren von einem Mikrocomputer beeinflußbaren, zur Ansteuerung von jeweils einem zugehörigen Verbraucher vorgesehenen Leistungshalbleiter-Endstufen bekanntgeworden, die über jeweils einen mit dem Mikrocomputer kommunizierenden, aus einem Rechnersystem und einer Interface-Einrichtung bestehenden, zum Schutz und zur Ansteuerung von zumindest einer Leistungshalbleiter-Endstufe bestimmten Schaltungskomplex an den Mikrocomputer angeschlossen sind. Dabei wird das Rechnersystem von einem Bussignale auswertenden Teil einer Steuerungs- und Schnittstelleneinheit gebildet, während als Interface-Einrichtung der den Leistungsschalter ansteuernde Teil der Steuerungs- und Schnittstelleneinheit sowie eine zugeordnete Überwachungeinheit anzusehen ist.
Das Rechnersystem eines jeden Schaltungskomplexes ist über die mit diesem verbundene Interface-Einrichtung mit zumindest einem einer der zugeordneten Leistungshalbleiter-Endstufe zugehörigen physikalischen Größe entsprechenden Wert beaufschlagt. Die Interface-Einrichtung erkennt dabei zwar den Wert einer an der Leistungshalbleiter-Endstufe anstehenden physikalischen Größe (Strom, Temperatur), reagiert aber nicht direkt, sondern meldet eine Fehlfunktion an den Mikrocomputer, der erst daraufhin reagiert.
Bei dieser Schaltungsanordnung wird nicht zwischen recht zeitkritischen und weniger zeitkritischen Veränderungen der physikalischen Größe unterschieden.

Hinsichtlich der Ausbildung von solchen Leistungshalbleiter-Endstufen ist es durch die sich auf ein an ein Bussystem anschließbares, mit einem Mikrocomputer und einer Leistungshalbleiter-Endstufe versehenes Ein- Ausgabemodul beziehende DE 44 40 280 A1 bekannt, als Leistungshalbleiter-Endstufe einen Feldeffekttransistor einzusetzen.

Darüber hinaus ist durch die DE 44 16 995 A1 eine eine Steuerungsanlage repräsentierende Schaltungsanordnung bekannt geworden, die mit einer von einem übergeordneten Mikrocomputer beeinflußbaren, zur Ein-/Ausschaltung eines zugehörigen, aus einer ohmschen oder induktiven Last gebildeten Verbrauchers vorgesehenen, durch einen zugeordneten, aus einem Rechnersystem und einer Interface-Einrichtung bestehenden Schaltungskomplex entsprechend ansteuerbaren Leistungshalbleiter-Endstufe versehen ist, wobei das Rechnersystem des Schaltungskomplexes zwecks Überwachung des Verbrauchers mit einem einer der zugeordneten Leistungshalbleiter-Endstufe zugehörigen physikalischen Größe entsprechenden Wert beaufschlagbar ist.
Bei diesem vorbekannten Gegenstand ist zwar jedem Verbraucher ein eigenes Rechnersystem zugehörig, so daß darüber auch zeitkritische Anforderungen/Aufgaben erledigt werden können.
Dies zusammen mit den neben der Leistungshalbleiter-Endstufe vorhandenen Schaltungskomponenten den Schaltungskomplex bildende Rechnersystem ist aber in die Leistungshalbleiter-Endstufe integriert, so daß keine optimierte Schutzfunktion für die Leistungshalbleiter-Endstufe und den angeschlossenen Verbraucher zu erreichen ist, wobei auch noch von Bedeutung ist, daß zwecks Optimierung der Schutzfunktion keine Zuordnung der zu überwachenden physikalischen Größe zu unterschiedlichen Schaltungskomponenten in Abhängigkeit der Veränderung der zu überwachenden physikalischen Größe vorgenommen wird, sondern nur eine Aufteilung der Anforderungen/Aufgaben auf entweder den Mikrocomputer oder das damit kooperierende Rechnersystem nach einem vorher festgelegten Schema. Außerdem hat die Integration den Nachteil, daß bei einem Ausfall eines der Bauteile des Schaltungskomplexes die gesamte Schaltungsanordnung ersetzt oder eine aufwendige Analyse derselben sowie ein nicht unbedeutender Austausch der betroffenen Schaltungskomponenten durchgeführt werden muß.

Schließlich ist durch die EP 0 499 695 A2 eine ebenfalls ein Steuerungssystem repräsentierende Schaltungsanordnung bekannt geworden, bei der auch eine Unterscheidung zwischen zeitkritischen und zeitunkritischen Vorgängen vorgenommen wird, wobei der zeitunkritische Teil der Anforderungen/Aufgaben in der zentralen, zumindest einen Mikroprozessor aufweisenden übergeordneten Einheit erledigt wird, während die zeitkritischen Anforderungen/Aufgaben von jeweils einem untergeordneten, ebenfalls jeweils ein Rechnersystem aufweisenden Schaltungskomplex abgewickelt werden.
Weitere Hinweise auf z.B. die Behandlung von zeitkritischen und zeitunkritischen Veränderungen einer von Schaltungskomponenten der Schaltungsanordnung zu erfassenden physikalischen Größe sind dieser Druckschrift nicht zu entnehmen.

Der vorliegenden Erfindung liegt die Aufgabe zugrunde, eine Schaltungsanordnung zu schaffen, durch die eine optimierte Schutzfunktion für die Leistungshalbleiter-Endstufen und die daran angeschlossenen Verbraucherkreise gewährleistet ist.

Erfindungsgemäß wird die Aufgabe durch die im Hauptanspruch angegebenen Merkmale gelöst.
Vorteilhaft bei einem derartigen Aufbau einer Schaltungsanordnung ist, daß durch den den Leistungshalbleiter-Endstufen direkt zugeordneten Schaltungskomplex bei geringer Belastung des vorgeschalteten Applikations-Mikrocomputers beliebige Sicherungseigenschaften einstellbar und die Möglichkeit einer PWM-Steuerung ohne weiteres gewährleistet ist.

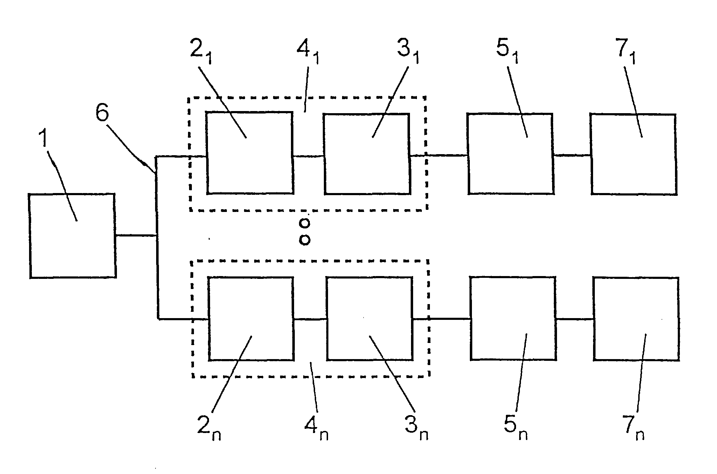

Weitere besonders günstige Ausgestaltungen des erfindungsgemäßen Gegenstandes sind in den Unteransprüchen angegeben und werden anhand eines in der Zeichnung dargestellten Ausführungsbeispieles näher erläutert.

Wie aus der Zeichnung hervorgeht, weist die Schaltungsanordnung einen Mikrocomputer 1 auf, der über einen Kommunikationskanal 6 mit mehreren Schaltungskomplexen 4₁-4ₙ verbunden ist, an denen über jeweils eine Leistungshalbleiter-Endstufe 5₁-5ₙ jeweils ein elektrischer Verbraucher 7₁-7ₙ - wie beispielsweise der Elektromotor von einem in einem Kraftfahrzeug angeordneten Lüfterantrieb - angeschlossen ist. Ein jeder einerseits zur Ansteuerung und andererseits zum Schutz der Leistungshalbleiter-Endstufen und damit der Verbraucher vorgesehener Schaltungskomplex 4₁-4ₙ besteht dabei wiederum aus einem am Mikrocomputer 1 angeschlossenen Rechnersystem 2₁-2ₙ und einer demselben zugeordneten, mit der Leistungshalbleiter-Endstufe 5₁-5ₙ verbundenen Interface-Einrichtung 3₁-3ₙ.
Über diese Interface-Einrichtungen werden an den Leistungshalbleiter-Endstufen auftretende physikalische Größen wie z.B. die elektrische Spannung, der elektrische Strom und die Temperatur erfaßt und den Rechnersystemen zugeführt.

Von denselben werden diese Größen verarbeitet und bei unzulässigen, recht zeitkritischen Veränderungen dieser Größen erfolgt direkt durch die Hardware der betroffenen Interface-Einrichtungen 3₁-3ₙ und zwar beispielsweise durch Abschaltung eine entsprechende Reaktion.
Bei weniger zeitkritischen Veränderungen dieser Größen wird eine im Rechnersystem 2₁-2ₙ hinterlegte, d.h. über den zum Mikrocomputer 1 bestehenden, als serielle und/oder parallele Schnittstelle ausgeführten Kommunikationskanal 6 programmierte Sicherungsfunktionen aktiviert, die auf die nachgeschaltete Endstufe und/oder den zugehörigen Verbraucher abgestimmt sind.
Im Zusammenhang mit einer solchen Ausgestaltung ist zu bemerken, daß aufgrund von niedrigen Verlustleistungen ein guter Wirkungsgrad realisierbar ist. Hinsichtlich der Ausbildung einer solchen Schaltungsanordnung ist es vorteilhaft, entweder die Interface-Einrichtungen als sogenannte ASIC-Bausteine und die Rechnersysteme als begrenzt leistungsfähige Mikrocomputer auszubilden oder die Interface-Einrichtungen und die Rechnersysteme gemeinsam in jeweils einem ASIC-Baustein zusammenzufassen.

Zur Verringerung des Aufwandes kann dann ein solcher Schaltungskomplex auch mehreren Leistungshalbleiter-Endstufen und damit den zugehörigen Verbrauchern zugeordnet sein, wobei es günstig ist, für die Leistungshalbleiter-Endstufen als Standard-Bausteine anzusehende Feldeffekt-Transistoren und zwar vorzugsweise sogenannte MOS-FET's zu verwenden.
Damit ist es möglich, eine leistungsbezogene Steuerung der Verbraucher 7₁-7ₙ zu realisieren und zwar in dem entweder in die Software der Rechnersysteme oder in die Hardware der Interface-Einrichtungen jeweils eine PWM-Steuerung implementiert wird.
Schließlich ist es günstig, wenn der Mikrocomputer 1 und die Rechnersysteme 2₁₋2ₙ mit Komponenten versehen sind, die für eine gegenseitige, auf korrekte Funktion ausgerichtete Überwachung bestimmt sind und bei Fehlfunktionen notwendige Gegenmaßnahmen einleiten, wobei dies über den Kommunikationskanal 6 erfolgt.

## Patentansprüche

1. Schaltungsanordnung - insbesondere für Kraftfahrzeug-Bordnetze - mit mehreren von einem Mikrocomputer (1) beeinflußbaren, zur Ansteuerung von jeweils einem zugehörigen Verbraucher (71-7n) vorgesehenen Leistungshalbleiter-Endstufen (51-5n), die über jeweils einen mit dem Mikrocomputer kommunizierenden, aus einem Rechnersystem (21-2n) und einer Interface-Einrichtung (31-3n) bestehenden, zur Überwachung und Ansteuerung von zumindest einer Leistungshalbleiter-Endstufe (51-5n) bestimmten Schaltungskomplex (41-4n) an den Mikrocomputer (1) angeschlossen sind, wobei das Rechnersystem (21-2n) eines jeden Schaltungskomplexes (41-4n) mit zumindest einem einer der zugeordneten Leistungshalbleiter-Endstufen (51-5n) zugehörigen physikalischen Größe entsprechenden Wert beaufschlagt ist, **dadurch gekennzeichnet, daß** das Rechensystem (21-2n) eines jeden Schaltungskomplexes (41-4n) über die jeweils mit demselben verbundene Interface-Einrichtung (31-3n) der jeweils zugehörigen Leistungshalbleiter-Endstufe (51-5n) derart zugeordnet ist, daß jeder Schaltungskomplex (41-4n) einerseits auf unzulässige, recht zeitkritische Veränderungen der physikalischen Größe(n) direkt durch die Hardware der Interface-Einrichtung (31-3n) und andererseits auf unzulässige, weniger zeitkritische Veränderungen der physikalischen Größe(n) durch eine über den zum Mikrocomputer (1) bestehenden Kommunikationskanal (6) programmierbare Sicherungsfunktion reagiert, wobei diese programmierbare Sicherungsfunktion für die weniger zeitkritischen Veränderungen im Rechnersystem (21-2n) hinterlegt und auf die nachgeschaltete Leistungshalbleiter-Endstufe (51-5n) und/oder den zugehörigen Verbraucher (71-7n) abgestimmt ist.

2. Schaltungsanordnung nach Anspruch 1, **dadurch gekennzeichnet, daß** der Schaltungskomplex (4₁-4ₙ) zur Erfassung des in der zugeordneten Leistungshalbleiter-Endstufe (5₁-5ₙ) auftretenden, die physikalische(n) Größe(n) darstellenden elektrischen Stromes und/oder der elektrischen Spannung und/oder der Temperatur vorgesehen ist.

3. Schaltungsanordnung nach Anspruch 1 oder Anspruch 2, **dadurch gekennzeichnet, daß** die Interface-Einrichtung (3₁-3ₙ) als sogenannter ASIC-Baustein und das Rechnersystem (2₁-2ₙ) als gegenüber dem Mikrocomputer (1) begrenzt leistungsfähiger d.h. mit den zugeordneten Steuerungs- und Überwachungsaufgaben voll ausgelaster Mikrocomputer ausgebildet ist.

4. Schaltungsanordnung nach Anspruch 1 oder Anspruch 2, **dadurch gekennzeichnet, daß** die Interface-Einrichtung (3₁-3ₙ) und das Rechnersystem (2₁-2ₙ) in einem ASIC-Baustein zusammengefaßt sind.

5. Schaltungsanordnung nach Anspruch 1 oder einem der folgenden, **dadurch gekennzeichnet, daß** eine Interface-Einrichtung (3₁-3ₙ) und ein Rechnersystem (2₁-2ₙ) mehreren Leistungshalbleiter-Endstufen (5₁-5ₙ) zugeordnet sind.

6. Schaltungsanordnung nach Anspruch 1 oder einem der folgenden, **dadurch gekennzeichnet, daß** die Leistungshalbleiter-Endstufen (5₁-5ₙ) aus Feldeffekt-Transistoren gebildet sind.

7. Schaltungsanordnung nach Anspruch 6, **dadurch gekennzeichnet, daß** die Feldeffekt-Transistoren aus MOS-FET's bestehen.

8. Schaltungsanordnung nach Anspruch 1 oder einem der folgenden, **dadurch gekennzeichnet, daß** der Kommunikationskanal (6) durch eine serielle und/oder parallele Schnittstelle realisierbar ist.

9. Schaltungsanordnung nach einem der Ansprüche 1 bis 8, **dadurch gekennzeichnet, daß** in der Software der Rechnersysteme (2₁-2ₙ) jeweils eine Pulweitenmodulation-Steuerung für die Leistungshalbleiter-Endstufen (5₁-5ₙ) implementiert ist.

10. Schaltungsanordnung nach einem der Ansprüche 1 bis 8, **dadurch gekennzeichnet, daß** in der Hardware der Interface-Einrichtungen (3₁-3ₙ) eine Pulsweitenmodulation-Steuerung für die Leistungshalbleiter-Endstufen (5₁-5ₙ) integriert ist.

11. Schaltungsanordnung nach Anspruch 1 oder einem der folgenden, **dadurch gekennzeichnet, daß** der Mikrocomputer (1) und die Rechnersysteme (2₁-2ₙ) jeweils mit zur gegenseitigen auf korrekte Funktion ausgerichteten Überwachung und zur Einleitung von bei Fehlfunktionen notwendigen geeigneten Gegen-Maßnahmen vorgesehenen Komponenten versehen ist.

12. Schaltungsanordnung nach Anspruch 11, **dadurch gekennzeichnet, daß** der Funktions-Überwachung und der Gegen-Maßnahmen-Einleitung der Kommunikationskanal (6) zugeordnet ist.

## Claims

1. Circuit configuration - especially for vehicle electrical systems - with several micro-computer- (1) controllable power semiconductor output modules (5₁-5ₙ) each of which is intended for activating an appertaining current-consumer (7₁-7ₙ), and each of which is connected to the micro-computer (1) by way of a circuit complex (4a-4n), consisting of a computer system (2₁-2ₙ) and an interface device (3₁-3ₙ), which communicates with the micro-computer and is intended for the monitoring and activation of at least one power semiconductor output module (5₁-5ₙ), whereby at least one value corresponding to a physical variable pertaining to the associated power semiconductor output module (5₁-5ₙ) is applied to the computer system (2₁-2ₙ) of each circuit complex (4₁-4ₙ), **characterized by the fact that** the computer system (2₁-2ₙ) of each circuit complex (4₁-4ₙ) is assigned to the associated power semiconductor output module (5₁-5ₙ), respectively, by means of the interface device (3₁-3ₙ) connected to the circuit complex, in such a way that each circuit complex (4₁-4ₙ) responds, on the one hand, to inadmissible, somewhat time-critical changes in the physical variable(s) by way of the hardware of the interface device (3₁-3ₙ) direct and, on the other hand, to inadmissible, less time-critical changes of the physical variable(s) by way of a programmable fuse function by means of a communication channel (6) established to the micro-computer (1), whereby this programmable fuse function is stored in the computer system (2₁-2ₙ) for the less time-critical changes and is tuned to the series-connected power semiconductor output module (5₁-5ₙ) and/or to the appertaining current consumers (7₁-7ₙ).

2. Circuit configuration in accordance with Claim 1, **characterized by** the fact that the circuit complex (4₁-4ₙ) is provided for the purpose of detecting the electrical current and/or the electrical voltage and/or the temperature representing the physical variable(s) occurring in the appertaining power semiconductor output module (5₁-5ₙ).

3. Circuit configuration in accordance with Claim 1 or Claim 2, **characterized by** the fact that the interface device (3₁-3ₙ) is developed as a so-called ASIC module and the computer system (2₁-2ₙ) as a micro-computer which, in contrast to the micro-computer (1), has a limited capacity, i.e. the appertaining control and monitoring tasks constitute its complete workload.

4. Circuit configuration in accordance with Claim 1 or Claim 2, **characterized by** the fact that the interface device (1-3ₙ) and the computer system (2₁-2ₙ) are combined in one ASIC module.

5. Circuit configuration in accordance with Claim 1 or any of the ensuing claims, **characterized by** the fact that an interface device (3₁-3ₙ) and a computer system (2₁-2ₙ) are assigned to several power semiconductor output modules (5₁-5ₙ).

6. Circuit configuration in accordance with Claim 1 or any of the ensuing claims, **characterized by** the fact that the semiconductor output modules (5₁-5ₙ) are formed of field-effect transistors.

7. Circuit configuration in accordance with Claim 6, **characterized by** the fact that the field-effect transistors are made up of MOS-FETs.

8. Circuit configuration in accordance with Claim 1 or any of the ensuing claims, **characterized by** the fact that the communication channel (6) can be effected by means of a serial and/or a parallel interface.

9. Circuit configuration in accordance with any of Claims 1 to 8, **characterized by** the fact that a pulse width modulation controller for each of the power semiconductor output modules (5₁-5n) is implemented in the software of the computer system (2₁-₂ₙ).

10. Circuit configuration in accordance with any of Claims 1 to 8, **characterized by** the fact that a pulse width modulation controller for the power semiconductor output modules (5₁-5ₙ) is integrated in the hardware of the interface devices (3₁-3ₙ).

11. Circuit configuration in accordance with Claim 1 or any of the ensuing, **characterized by** the face that the micro-computer (1) and the computer systems (2₁-2ₙ) are each equipped with components provided for monitoring each other on the lines of correct functioning and for initiating the necessary, appropriate counter-measures in the case of malfunctions.

12. Circuit configuration in accordance with Claim 11, **characterized by** the fact that the monitoring of functions and the initiation of counter-measures are assigned to the communication channel (6).

## Revendications

1. Circuit de commutation - tout particulièrement pour réseaux de bord de véhicules automobiles - comprenant plusieurs étages finaux à semi-conducteurs de puissance (5₁-5ₙ), soumis à l'influence d'un micro-ordinateur (1) et prévus chacun pour l'excitation d'un consommateur afférent (7₁-7ₙ), lesquels étages finaux à semi-conducteurs de puissance (5₁-5ₙ) sont raccordés au micro-ordinateur (1) chacun par l'intermédiaire d'un groupe de commutation (4₁-4ₙ) qui, composé d'un système de calculateur (2₁-2ₙ) et d'un dispositif d'interface (3₁-3ₙ), communique avec le micro-ordinateur et est destiné à contrôler et exciter au moins un étage final à semi-conducteurs de puissance (5₁-5ₙ), le système calculateur (2₁-2ₙ) de chaque groupe de commutation (4₁-4ₙ) étant soumis à une valeur qui correspond à une grandeur physique afférant à l'un des étages finaux à semi-conducteurs de puissance (5₁-5ₙ) coordonnés,
**caractérisé en ce que**
le système de calculateur (2₁-2ₙ) de chaque groupe de commutation (41-4n) est coordonné, par l'intermédiaire du dispositif d'interface (3₁-3ₙ), à l'étage final à semi-conducteurs de puissance (5₁-5ₙ) respectivement afférent, de sorte que chaque groupe de commutation (4₁-4ₙ) réagisse, d'une part, aux changements inadmissibles, critiques au niveau de la durée de la/des grandeur/s physique/s directement par le matériel du dispositif d'interface (3₁-3ₙ) et, d'autre part, aux changement inadmissibles, moins critiques au niveau de la durée de la/des grandeur/s physique/s par une fonction de sécurisation programmable par l'intermédiaire du canal de communication (6) à destination du micro-ordinateur (1), cette fonction de sécurisation programmable étant mémorisée dans le système de calculateur (2₁-2ₙ) pour les changements moins critiques au niveau de la durée et abgestimmt à l'étage final à semi-conducteurs de puissance (5₁-5ₙ) connecté en aval et/ou au consommateur afférent (7₁-7ₙ).

2. Circuit de commutation selon la revendication 1,
**caractérisé en ce que**
le groupe de commutation (4₁-4ₙ) est prévu pour la saisie du courant électrique présent à l'étage final à semi-conducteurs de puissance (5₁-5ₙ) y coordonné et représentant la/les grandeur/s physique/s et/ou de la tension et/ou de la température.

3. Circuit de commutation selon la revendication 1 ou 2,
**caractérisé en ce que**
le dispositif d'interface (3₁-3ₙ) est conçu en tant que bloc fonctionnel ASIC et le système de calculateur (2₁-2ₙ) en tant que micro-ordinateur plus performant, dans une mesure limitée, que le micro-ordinateur (1), c.-à-d. utilisé à pleine capacité pour les tâches de monitorage et de commande correspondantes.

4. Circuit de commutation selon la revendication 1 ou 2,
**caractérisé en ce que**
le dispositif d'interface (3₁-3ₙ) et le système de calculateur (2₁-2ₙ) sont réunis dans un bloc fontionnel ASIC.

5. Circuit de commutation selon la revendication 1 ou l'une des suivantes,
**caractérisé en ce que**
un dispositif d'interface (3₁-3ₙ) et un système de calculateur (2₁-2ₙ) sont coordonnés à plusieurs étages finaux à semi-conducteurs de puissance (5₁-5ₙ).

6. Circuit de commutation selon la revendication 1 ou l'une des suivantes,
**caractérisé en ce que**
les états finaux à semi-conducteurs de puissance (5₁-5ₙ) sont formés par des transistors à effet de champ.

7. Circuit de commutation selon la revendication 6,
**caractérisé en ce que**
les transistors à effet de champ sont des MOSFET's.

8. Circuit de commutation selon la revendication 1 ou l'une des suivantes,
**caractérisé en ce que**
le canal de communication (6) peut être réalisé par une interface sérielle et/ou parallèle.

9. Circuit de commutation selon l'une des revendications 1 à 8,
**caractérisé en ce que**,
dans le logiciel des systèmes de calculateurs (2₁-2ₙ), une commande de modulation pulweiten est respectivement implantée pour les étages finaux à semi-conducteurs de puissance (5₁-5ₙ).

10. Circuit de commutation selon l'une des revendications 1 à 8,
**caractérisé en ce que**,
dans le matériel des dispositifs d'interface (3₁-3ₙ) une commande de modulation d'impulsions en largeur est intégrée pour les états finaux à semi-conducteurs de puissance (5₁-5ₙ).

11. Circuit de commutation selon la revendication 1 ou l'une des revendications suivantes,
**caractérisé en ce que**
le micro-ordinateur (1) et les systèmes de calculateurs (2₁-2ₙ) sont pourvus chacun d'éléments constitutifs prévus pour une supervision mutuelle en vue d'un fonctionnement correcte la mise en oeuvre des contre-mesures adéquates exigées en cas de fonctionnement incorrect.

12. Circuit de commutation selon la revendication 11,
**caractérisé en ce que**
le canal de communication (6) est coordonné à la supervision du fonctionnement et à la mise en oeuvre des contre-mesures.
